Europäisches Patentamt

European Patent Office

Office européen des brevets

(11) Publication number: **0 337 626**
**A1**

## (12) EUROPEAN PATENT APPLICATION

(21) Application number: **89303026.2**

(22) Date of filing: **23.03.89**

(51) Int. Cl.4: **B01D 13/04 , C08L 71/00 , C08L 65/00**

(30) Priority: **29.03.88 GB 8807372**

(43) Date of publication of application:
**18.10.89 Bulletin 89/42**

(84) Designated Contracting States:
**AT CH DE ES FR GB IT LI NL SE**

(71) Applicant: **PCI MEMBRANE SYSTEMS LIMITED**
**Laverstoke Mill Whitchurch**
**Hampshire RG28 7NR(GB)**

(72) Inventor: **Peer, Martin James**
**18 Byfleet Avenue**
**Basing Hampshire(GB)**

(74) Representative: **Hardisty, David Robert et al**
**BOULT, WADE & TENNANT 27 Furnival Street**
**London EC4A IPQ(GB)**

(54) **Membranes.**

(57) A polymer blend comprising sulphonated polyetheretherketone in an intimate blend or alloy with at least one other compatible polymer, the sulphonated polyetheretherketone being present in an amount of from 1 to 95% by weight based on the total weight of the polymer, is provided together with membranes made from said polymer blend and a method of using said membranes for reverse osmosis, ultrafiltration or microfiltration. The amount of sulphonated polyetheretherketone (SPEEK) is preferably from 2 to 30% and more preferably 5 to 20% by weight. The degree of sulphonation can be from 0.5 or 0.75 to 4.0 and is preferably from 1.5 to 2.0 meq/g. The membranes provided by this invention have improved hydrophillic properties while being prepared from relatively hydrophobic polymers.

EP 0 337 626 A1

## MEMBRANES

The invention relates to membranes and in particular to membranes suitable for use in reverse osmosis, ultrafiltration or microfiltration.

Polymeric membranes are used in a wide range of separation processes e.g. reverse osmosis ultrafiltration, microfiltration, pervaporation and gas separation.

These membranes have many diverse applications, ultrafiltration membranes for instance may be used to separate lactose and salts from proteins in cheese whey, for the fractionation of lignosulphonates in spent suphite liquors, the concentration of emulsified oils in waste cutting oil emulsions and the clarification of fruit juices.

Many of the polymers, particularly those used in the manufacture of ultrafiltration and microfiltration membranes, are hydrophobic in character e.g. polyvinylidene fluoride and polysulphone. The performance of these membranes is often inferior to that of membranes made from more hydrophilic polymers due to a greater tendency for the membrane to become fouled or to absorb material from the solution being processed. This particularly applies to the treatment of aqueous solutions. Membranes made from these hydrophobic polymers tend however to be mechanically and chemically more robust.

This application provides membranes with improved hydrophillic properties from relatively hydrophobic polymers.

European patent specification EP-A-142 973 discloses membranes produced from solutions of sulphonated polyarylethersulphones, and these solutions can be used for the production of asymmetric semipermeable membranes. It has now been found that membranes for reverse osmosis, ultrafiltration or microfiltration having useful and in some cases valuable properties can be prepared using sulphonated polyetherketones. European patent specificiation EP-B-1879 discloses various polyetheretherketones and a process for making these polymers. These various polyetherketones may be used, when sulphonated, in the membranes according to the present invention.

Also, Offenlegungsschrift DE 3321860 discloses the preparation of an asymmetric ultrafiltration membrane in which a polyetheretherketone is sulphonated in a solution of concentrated sulphuric acid and thereafter an ultrafiltration membrane is obtained by precipitating the membrane from the sulphuric acid solution.

The present invention provides a polymer blend comprising sulphonated polyetheretherketone in an intimate blend or alloy with at least one other compatible polymer, the sulphonated polyetheretherketone being present in an amount of from 1 to 95% by weight based on the total weight of the polymers; preferably the amount of sulphonated polyetheretherketone (SPEEK) is from 2 to 30% and more preferably from 5 to 20% by weight. The degree of sulphonation may be from 0.5 or 0.75 to 4.0 and is preferably from 1.5 to 2.0 meq/g.

In general the sulphonated polyetheretherketone will be blended with one additional polymer for example a polyetheretherketone, a polysulphone such as Amoco polymer Udel P 1700 and the Imperial Chemical Industries polymer Victrex 5200P, polyvinylidene fluoride, polyacrylonitrile, cellulose triacetate or a polyamide, such as Trogamid T. (Trogamid T is an amorphous polyamide produced from dimethylterephthalate and trimethylhexamethylenediamine.) The compatible polymer is one which has solubility in an organic solvent, preferably a water-miscible organic solvent, from which a membrane may be cast.

In making membranes it is desirable to produce a solution of the polymer blend in a solvent or a mixture of solvents, and it is preferred that the solution is stable and has a clear appearance; a preferred solvent for making membranes in accordance with this invention is N-methyl pyrrolidone. In general membranes in accordance with this invention may be obtained by spreading a film of a solution of the mixture of polymers and removing the solvent to form the membrane. This operation may be carried out on an impervious surface so that a membrane which is self-supporting may be obtained, or alternatively the solution may be spread onto a microporous layer to produce a composite membrane as is well known in the art.

The invention also includes a method of effecting a separation by reverse osmosis, ultrafiltration or microfiltration using a membrane in accordance with this invention. It has been found that membranes in accordance with this invention are particularly useful in effecting separations where a solute is dissolved in a solvent, such as seawater and aqueous effluents, solutions in which the solute is an organic molecule or micromolecule, such as sugar solutions and solutions containing enzymes, proteins, nucleic acids, solutions which simultaneously contain salts and organic molecules such as milk whey, digestive juices, fruit juices and the like. All these solutions can also contain suspended insoluble constitutents.

As is well known a fractionation by the various techniques referred to herein may be complete or partial depending on the purity required in the product.

The membranes in accordance with this invention may be used in suitable apparatus in a flat form or in a tubular form or even in the form of hollow fibres. The membranes may be used as such or combined with a reinforcing support.

As is well known the performance of membranes for reverse osmosis, ultrafiltration or microfiltration depends on various factors, especially their thickness and structure, and generally the membranes will be asymmetric, that is the membrane possesses a dense layer which forms the semi-permeable membrane of low thickness and a more porous layer which acts as a reinforcing support; asymmetric membranes may be produced by coagulating a solution spread on an impervious surface by lowering the temperature or by the action of a non-solvent.

Preparation of Sulphonated Polyetheretherketone

45g of polyetheretherketone (PEEK) obtained from Imperial Chemical Industries plc and sold under the designation Victrex 380 P was dissolved in 300mls of concentrated sulphuric acid at ambient temperature and this took about two hours.

The resulting solution was held at 25°C for a further 22 hours. The sulphonated polymer was then recovered by pouring the resulting solution as a fine stream into demineralised water whereupon the sulphonated polyetheretherketone was precipitated. The precipitated polymer was washed until free of acid and was then dried at 80°C for 24 hours. Examination of the polymer indicated that the sulphonic acid content varied on a number of preparations from 1.85 to 1.92 meq/g.

If it is desired to use the SPEEK polymer in salt form, then the resulting polymer may be neutralised with a base, for example sodium hydroxide to produce the sodium salt.

Examples

The following five examples are of stable solutions produced using sulphonated polyetheretherketone having a sulphonic acid content of 1.85 meq/g and N-methyl pyrrolidone as the solvent.

| Example | Polymer | wt % SPEEK | wt % Polymer | wt % NMP |
|---------|---------|------------|--------------|----------|
| 1 | Polyethersulphone | 4 | 6 | 90 |
| 2 | Polyvinylidene fluoride | 4 | 6 | 90 |
| 3 | Polyacrylonitrile | 4 | 6 | 90 |
| 4 | Cellulose triacetate | 4 | 6 | 90 |
| 5 | Polyvinylchloride | 4 | 6 | 90 |

These solutions were made by predissolving the SPEEK in the solvent and then dissolving the other polymer in the SPEEK solution. All these solutions have 2o remained stable for 2 months at ambient temperature.

The following examples illustrate the range of compositions which provide stable solutions.

| Example | wt % Polyethersulphone | wt % SPEEK | wt % NMP |
|---------|------------------------|------------|----------|
| 6 | 19.5 | 0.5 | 80 |
| 7 | 19.0 | 1.0 | 80 |
| 8 | 17.0 | 6.0 | 80 |
| 9 | 11.0 | 9.0 | 80 |
| 10 | 2.0 | 18.0 | 80 |
| 11 | 0.5 | 19.5 | 80 |

PREPARATION OF MEMBRANES

## 1. Preparation of Casting Solution

A solution of SPEEK in the solvent was produced first and the other polymer added once a clear solution had been obtained to provide a clear solution containing the two polymers.

## 2. Membrane Casting

A thin layer of the solution (0.010" (0.25mm) thick) was spread on the inside of a porous support tube. The coated tube was then held in air at ambient temperature for 30 seconds prior to immersion in tap water at 12°C. After 30 minutes the support tube with its membrane was removed from the gelation bath and washed for 1 hour in running tap water to remove residual solvent prior to testing.

## 3. Membrane Formulation and Testing

The membraned tubes were tested at a working pressure of 3.0 bar on a recirculated feed solution containing 150ppm of a dextran with an average molecular weight of 70,000.

### MEMBRANE PERFORMANCE

| Polymer | Wt% Polymer | Wt% SPEEK | Wt% NMP | Flux 15°C L/M2HR | % S.P. |
|---|---|---|---|---|---|
| Polyethersulphone | 23.0 | - | 77.0 | 94.0 | 8.3 |
| | 22.0 | 1.0 | 77.0 | 64.5 | 0.5 |
| | 20.0 | 3.0 | 77.0 | 101.0 | 6.8 |
| | 17.0 | 6.0 | 77.0 | 111.0 | 16.8 |
| Trogamid T | 20.0 | 0.0 | 80.0 | 104.00 | 81.5 |
| | 19.8 | 0.2 | 80.0 | 230.00 | 95.2 |
| | 14.0 | 6.0 | 80.0 | 170.00 | 79.7 |
| S.P. indicates solute passage. | | | | | |

All tubes were produced using SPEEK with an ion-exchange capacity (IEC) of 1.85 meq/g.

The polyestersulphone referred to in the above specific description was the ICI polymer Victrex 5200 P.

It is to be understood that the sulphonated polyetheretherketone may contain up to 20% of repeating units other then (ether ether Ketone), and desirably not more than 10% of such other repeating units; it is however preferred that the sulphonated polyetheretherketone contains no such other repeating units.

## Claims

1. A polymer blend comprising sulphonated polyetheretherketone in an intimate blend or alloy with at least one other compatible polymer, the sulphonated polyetheretherketone being present in an amount of from 1 to 95% by weight based on the total weight of the polymers.

2. A polymer blend as claimed in claim 1 wherein the amount of sulphonated polyetheretherketone is from 2 to 30% by weight.

3. A polymer blend as claimed in claim 2 wherein the amount of sulphonated polyetheretherketone is from 5 to 20% by weight.

4. A polymer blend as claimed in any one of the preceding claims wherein the degree of sulphonation of the polyetheretherketone is from 0.75 to 4.0 meq/g.

5. A polymer blend as claimed in any one of the preceding claims wherein the other polymer is polysulphone, polyvinylidene fluoride, polyacrylonitrile, cellulose triacetate or a polyamide (such as Trogamid T).

4

6. A solution of a mixture of polymers as claimed in any one of the preceding claims, which solution is stable and has a clear appearance.

7. A solution as claimed in claim 6 wherein the solvent is N-methyl pyrrolidone.

8. A membrane for reverse osmosis, ultrafiltration or microfiltration which membrane is formed from a polymer blend as claimed in any one of claims 1 to 5.

9. A membrane as claimed in claim 8 which is formed by a film of a solution as claimed in claim 6 or claim 7 and removing the solvent.

10. A method of effecting a separation by reverse osmosis, ultrafiltration or microfiltration wherein there is used a membrane as claimed in claim 8 or claim 9.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| Y | EP-A-0 254 455 (IMPERIAL CHEMICAL INDUSTRIES) * claims 1,5,9 * | 1-5,8, 10 | B 01 D 13/04 C 08 L 71/00 C 08 L 65/00 |
| D,Y | DE-A-3 321 860 (FORSCHUNGSINSTITUT BERGHOF) * claim 1 * | 1-5,8, 10 | |
| A | EP-A-0 182 506 (IMPERIAL CHEMICAL INDUSTRIES) * claims 1,9 * | 6,8 | |
| A | EP-A-0 176 988 (UNION CARBIDE) * claim 1 * | 1 | |
| P,A | EP-A-0 277 834 (HYDRANAUTICS) * claims 8,9; page 6, lines 42-55; page 11, lines 34-38 * | 1,8,10 | |
| A | EP-A-0 008 895 (IMPERIAL CHEMICAL INDUSTRIES) * claims 1,9 * | 1 | |
| A | PATENT ABSTRACTS OF JAPAN vol. 11, no. 63 (C-406) (2510), 26 February 1987; & JP - A - 61222503 (NITTO ELECTRIC IND.) 03.10.86* abstract * | 1,8,10 | TECHNICAL FIELDS SEARCHED (Int. Cl.4) B 01 D 13/04 C 08 L 71/00 C 08 L 65/00 C 08 G 65/48 |
| D,A | EP-A-0 001 879 (ICI) | | |

The present search report has been drawn up for all claims

| Place of search | Date of completion of the search | Examiner |
|---|---|---|
| BERLIN | 07-06-1989 | CORDERO ALVAREZ M. |